# EUROPEAN PATENT SPECIFICATION

(11) **EP 1 473 963 B1**
(45) Date of publication and mention of the grant of the patent: **13.11.2019**
(21) Application number: 03291046.5
(22) Date of filing: 30.04.2003
(51) Int. Cl.: H04R 1/02, H04R 5/02, B60R 11/02

(54) **Loudspeaker mounting frame, loudspeaker and loudspeaker cabinet**
Montagerahmen für Lautsprecher, Lautsprecher und Lautsprechergehäuse
Cadre de montage pour haut-parleur, haut-parleur et enceinte de haut-parleur

(43) Date of publication of application: 03.11.2004
(73) Proprietor: InterDigital Madison Patent Holdings, 75017 Paris (FR)
(72) Inventor: Sperle, Cornelius, 49100 Angers (FR); Fremanteau, Patrice, 49140 Villeveque (FR); Bourgoin, Gilles, 49100 Angers (FR)
(74) Representative: Le Dantec, Claude

(56) References cited:
- JP-A- 58 003 390
- US-A- 4 027 841
- US-A- 4 166 933
- US-A- 4 602 382
- US-A- 5 608 809
- US-A- 5 739 481
- US-A- 6 081 421

## Description

The present invention relates to a loudspeaker mounting frame for mounting a loudspeaker in a cabinet of an electronic device such as a radio, a television set or any other type of audio or audio/video appliance. It further relates to a loudspeaker and to a cabinet comprising such a mounting frame.

Conventionally, electromagnetic loudspeakers have a sound-radiating membrane of roughly frusto-conical shape, the outer rim of which is fixed to a rigid support ring. Webs extending from this support ring hold an electromagnet for driving the vibrations of the membrane in position at the small base of the frusto-conical membrane. In this support ring, a plurality of holes is formed. Such a loudspeaker is usually installed by placing its rear side on a carrier and driving screws through the holes into the carrier.

In order to protect the loudspeaker membrane from damage, it should be covered by a sound-transmission hood such as a stretched fabric or a perforated shell that will let the sound from the loudspeaker pass to the outside but will prevent outside objects from reaching the membrane and damaging it. The distance between the membrane and the hood should be kept small in order to prevent an unwanted dampening of trebles.

A loudspeaker assembly comprising a carrier and a hood as described above is complicated and expensive to produce.

It might therefore be contemplated to simplify such an assembly by using a stiff perforated shell as the protective hood and to provide receiving portions in this shell for receiving the shafts of screws by which the loudspeaker is screwed to the shell.

Such a solution is unsatisfying for various reasons. One reason is that the shaft receiving portions must be located between the shell and the support ring of the loudspeaker, whereby the distance between the shell and the loudspeaker is increased by the length of the shafts, at minimum, and reproduction of trebles is impaired. Another reason is that modern electronic appliances frequently have a freely curved shape. If such a shape is formed by moulding, bores of the shaft receiving portions must be parallel to the direction of displacement of the mould elements in the moulding process, because otherwise moulds having a high number of movable elements are required. However, this direction of displacement is not necessarily perpendicular to a mounting plane of the loudspeaker. If it is not, fixing screws will extend through the holes of the support ring at non-perpendicular angles, making the assembly awkward and irreproducible.

US-A-5608809 discloses a loudspeaker mounting apparatus that is fixed on a cabinet by screwing screws inserted through holes provided on the loudspeaker mounting apparatus.

US5739481A describes a speaker mounting system wherein the speaker is mounted to a support interface indirectly by a compliant gasket with no rigid mechanical coupling between the speaker and the surface.

US4027841A relates to providing reproducible mounting and/or interchange of prealigned optical assemblies by providing tapered holes for screws.

US6081421A describes mounting a loudspeaker in a computer system by utilizing tabs that have a hole adapted to receive a corresponding post.

The invention aims at providing a technique for mounting a loudspeaker in an electronic appliance cabinet in which at least some of the problems of the prior art are avoided.

In a first instance, the invention proposes a system comprising a loudspeaker mounting frame and a cabinet element according to claim 1. Further embodiments of the invention are described in the dependent claims 2-14. The loudspeaker mounting frame has a central opening for receiving a loudspeaker membrane and a plurality of through holes surrounding said central opening for receiving a fixing means for fixing the mounting frame to a cabinet, wherein said through holes are tapered. The tapered shape allows for fixing means such as pins or screws to extend through the through holes in various directions without risk of interference, so that the frame may be easily and reproducibly mounted in a variety of oblique orientations that may be required by a convex shape of the cabinet in which the loudspeaker is installed.

A tapering angle of the through holes of 5° to 15° has proved suitable.

The loudspeaker mounting frame, preferably a frame as defined above, has a central opening for receiving a loudspeaker membrane and a plurality of through holes that extend between front and rear main surfaces surrounding said central opening for receiving fixing means, wherein said mounting frame has a number of bosses formed on at least one of said main surfaces, and said through holes extend through said bosses. Conventionally, if a workpiece is fixed to a support using a screw extending through a bore of the workpiece, and the screw is not perpendicular to the surface surrounding the bore, the screw head will not lie flat on the surface surrounding the bore, but instead, only a point contact will arise. This point contact can exercise considerable torque on the screw, so that in order to achieve a solid mount, a long thread of the screw is necessary. According to the invention by providing a boss surrounding each through hole, a contact between the surface of the boss and the head of the screw will be close to the screw shaft, so that torque is small and a solid mount can be achieved using a short thread.

Preferably, the bosses have the shape of sphere segments.

In order to achieve a contact between a screw head and the boss close to the shaft of the screw, it is preferable that the narrow side of a tapered through hole through which the screw extends is formed at the same surface of the mounting frame as the bosses.

The invention also proposes a loudspeaker comprising a system as defined above and a sound-emitting membrane mounted in the central opening of said mounting frame. In that case, the mounting frame may be integrally combined with the loudspeaker support ring as defined above, i.e., the loudspeaker membrane may be connected directly to an edge of the central opening of the mounting frame. On the other hand, the loudspeaker support ring and the mounting frame might be two different parts, the membrane being directly connected to the support ring and the support ring being mounted in the central opening of the mounting frame.

The invention also proposes a loudspeaker system comprising a loudspeaker as defined above and a loudspeaker cabinet having a support structure to which a loudspeaker mounting frame as defined above or a loudspeaker as defined above is mounted, and a perforated shell facing the sound-emitting membrane of such a loudspeaker.

For a quick and easy assembly of the loudspeaker cabinet, it is preferred that the support structure has at least one pin matingly engaging one of said through holes of the mounting frame and at least one bore aligned with another one of said through holes for receiving a fixing bolt inserted through said through hole. With such a design, it is possible first to engage the mounting frame with said at least one pin, so that it is temporarily held, and then to finish the assembly by fixing said at least one bolt.

As already indicated above, the head of the bolt should come into contact with the surface of one of said bosses.

In order to keep the design of the cabinet simple, the support structure and perforated shell may be the same part. Since the bolts must not emerge at the front side of the perforated shell, the shell is preferably provided with a number of stubs formed on it, the stubs having resting surfaces which are in contact with the mounting frame, and the at least one mating pin and the at least one bore are formed at one of said resting surfaces, respectively. Since the head of the bolt is in contact with the surface of the boss surrounding the through hole in which it is inserted, the torque acting on the bolt is small, so that a short shaft of the bolt is sufficient for a solid fixation. Accordingly, the stubs may also be kept short, thus keeping the distance between the loudspeaker membrane and the perforated shell short, which, in turn, is favourable for reproduction of trebles.

A further possible feature for decreasing the distance between the loudspeaker membrane and the perforated shell is that a mounting surface portion of the mounting frame - to which a loudspeaker membrane may be fixed directly or via a support ring, as indicated above - surrounding the central opening is located between a plane defined by the tips of the stubs protruding from the perforated shell and the perforated shell itself.

Further objects, features and advantages of the present invention will become apparent from the subsequent description of specific embodiments referring to the drawings.
- Fig. 1: is a perspective front view of a loudspeaker mounting frame according to a first embodiment of the invention;
- Fig. 2: is a perspective rear view of the mounting frame of Fig. 1;
- Fig. 3: shows part of a cabinet element for an electronic appliance;
- Fig. 4: is a section of the cabinet element of Fig. 3 with a loudspeaker and a mounting frame mounted to it; and
- Fig. 5: is a perspective view of the cabinet element of Fig. 3 with a loudspeaker mounted to it, according to a second embodiment of the invention.

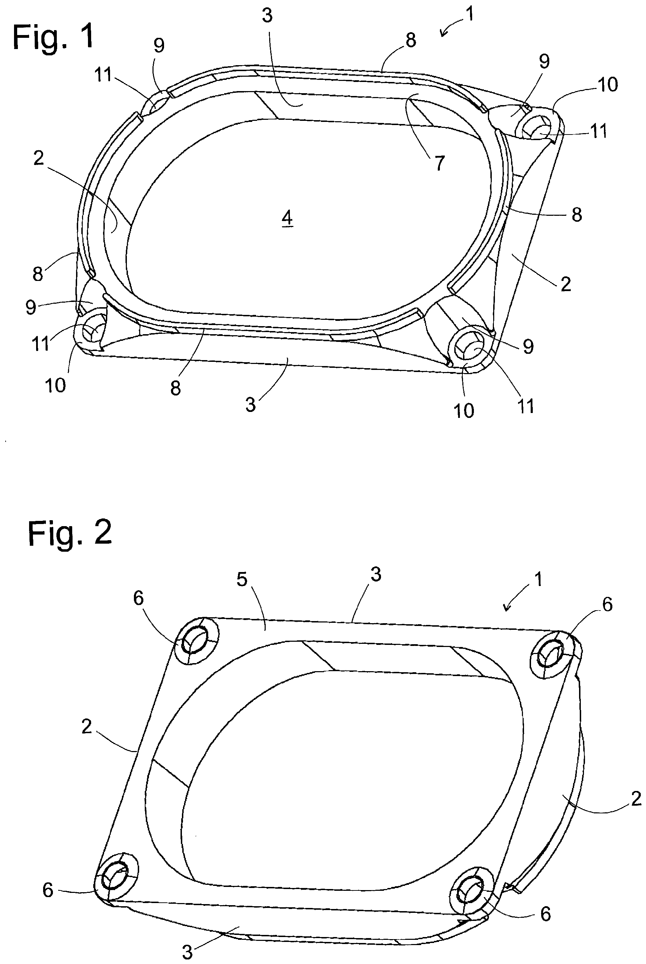

Figs. 1 and 2 show front and rear sides of a loudspeaker mounting frame 1 according to a first embodiment of the invention. The frame 1 is integrally formed by injection moulding of plastic material. It has four webs 2, 2, 3, 3 defining the sides of a rectangle with rounded corners and surrounding a central opening 4. Its rear side 5 is essentially flat, except for spherical bosses 6 at four corners.

At the front side of the frame 1, a flat rim 7 extends around the central opening 4.

The rim 7, in turn, is surrounded by ribs 8. The ribs 8 are shaped so that a support ring of a loudspeaker, not shown, may be placed on the rim 7 and held in place by the ribs 8.

In the corners of the front side of the mounting frame 1, there are four recesses 9, each of which has a flat base surface 10. The base surfaces 10 of all recesses are in one plane, parallel to the two planes defined by the rim 7 and the rear side 5, respectively. A tapered hole 11 extends from the base surface 10 of each recess to the bosses 6 at the rear side 5. The tapering angle of the holes 11 is 5° to 15°, preferably about 10°. The narrow side of the holes 11 is at rear side 5.

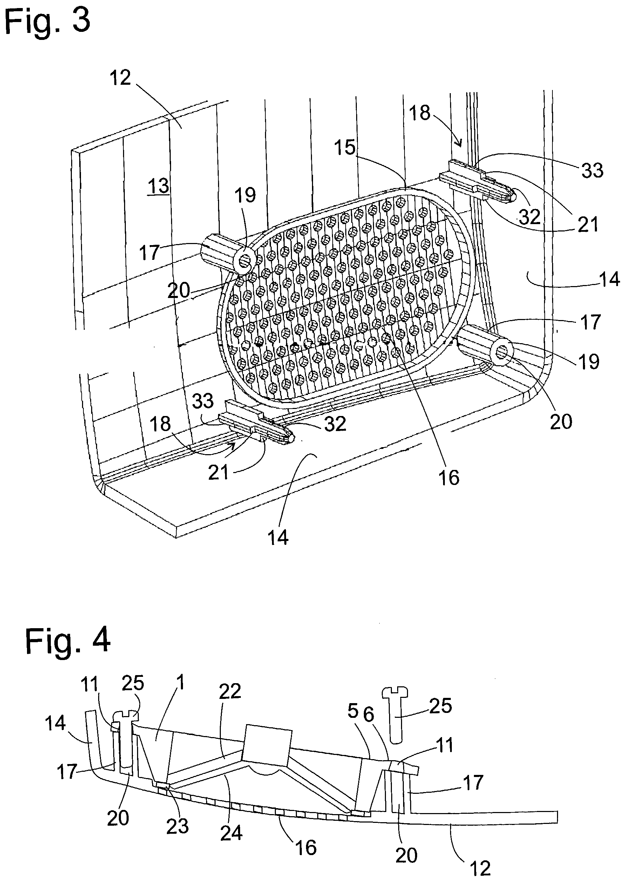

The purpose of the mounting frame 1 is to facilitate mounting a loudspeaker to a cabinet element of an electronic appliance. Fig. 3 is a perspective view of part of such a cabinet element 12, seen from inside. In the Figure, part of a main surface 13 and lateral flanks 14 of the cabinet element 12 are shown. The main surface 13 has a convex curvature. An oval rib 15 delimits a perforated surface portion 16 of the main surface 13. Behind this perforated surface portion 16, a loudspeaker is to be installed. The outline of rib 15 is adapted to that of ribs 8 so that the ribs 8 can matingly engage inside the rib 15, whereby a support ring of a loudspeaker is held fixed between rim 7 and the perforated surface portion 16 facing it.

For fixing the mounting frame 1 to the cabinet element 12, four stubs 17, 18 are formed at the inside of main surface 13, surrounding rib 15. Two of these stubs 17 are cylinders having flat end faces 19. In these, a blind bore 20 is formed coaxially to the stub 17.

The other two stubs 18 have a cross-shaped cross section with resting shoulders 21 formed therein between base portions 33 and tip portions 32 thereof. The resting shoulders 21 and the end faces 19 are located in the same plane.

Fig. 4 is a section of cabinet element 12 in a plane extending through the two stubs 17, and of the mounting frame 1 and a loudspeaker 22 mounted to the cabinet element 12. An angular support ring 23 of the loudspeaker is held tight between the cabinet element 12 and the mounting frame 1. It supports the outer rim of a loudspeaker membrane 24. The mounting frame 1 is held in place by two screws 25 extending through two of the tapered holes 11 and engaging the blind bores 20 of stubs 17. The other two tapered holes 11 (not shown in Fig. 4) are engaged by the tip portions 32 of stubs 18. It is readily apparent that the stubs 17 (and 18, too) are not perpendicular to the perforated surface portion 16, but extend at an oblique angle. The reason for this is that the cabinet element 12 is formed by injection moulding in a two part mould, and that the direction of the stubs 17, 18 is defined by the direction in which the parts of the mould move with respect to each other when disengaging and releasing the cabinet element 12. Accordingly, the rear side 5 of frame 1 is not perpendicular to the stubs 17, 18 and to the engaging direction of the screws 25, either. Due to the tapered shape of the holes 11, it is not difficult to insert the screws 25, although the diameter of the narrow ends of the holes need not be much larger than that of the screw shaft. Due to the tilted orientation of the screw 25, not all of the rear side of the screw head can come into contact with the frame 1. If the rear side 5 of the mounting frame 1 were flat, only a point at the circumference of the screw head would be able to touch the frame 1, and the screw 25 would be subject to a torque tending to rotate it clockwise in Fig. 4. By providing the bosses 6, the point of contact between the screw head and the frame 1 is moved close to the shaft of the screw 25, so that the torque acting on the screw 25 is reduced. Accordingly, a shorter thread of the screw 25 is sufficient for a solid fixation. In consequence, the screws 25 and the stubs 17, 18 may be made short, and space inside the cabinet may be saved.

Space is also saved by the fact that the holes 11 are formed at the bottom of recesses 9. The depth of these recesses 9 is equal to the length of the stubs 17 and of the base portions 33, so that these may be accommodated within the recesses 9, and the support ring of the loudspeaker is held in direct contact with the perforated surface portion 16.

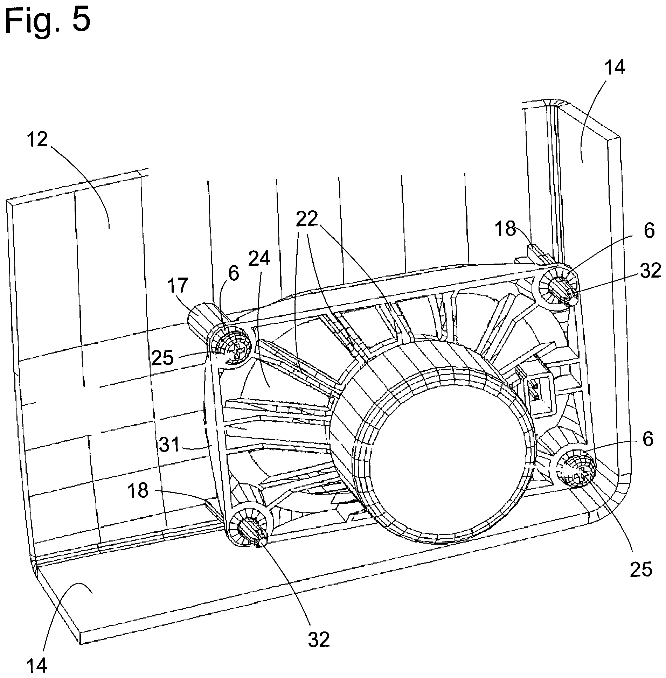

Fig. 5 is a perspective view of the cabinet element 12 of Fig. 3, with a loudspeaker 30 according to a second embodiment of the invention mounted to it. In this embodiment, the mounting frame and the support ring supporting the loudspeaker membrane are the same thing and will be referred to as mounting frame 31.

The mounting frame 31 is fixed to the cabinet element 12 in the same way as mounting frame 1 of Figs. 1, 2. Two of its holes 11 are brought into engagement with tip portions 32 of stubs 18 that extend beyond the resting shoulders 21. When the base surfaces 10 surrounding these two holes come into contact with the resting shoulders 21 of the stubs 18, the other base surfaces come into contact with the end faces 19 of stubs 17. In this position, the screws 25 are inserted through the remaining holes 11 and brought into engagement with the bores 20 of stubs 17. When the screw heads come into contact with bosses 6, the loudspeaker is solidly held.

## Claims

1. A system comprising a loudspeaker mounting frame (1, 31) and a cabinet element (12), said loudspeaker mounting frame (1, 31) having a central opening (4) for receiving a loudspeaker membrane (24) and a plurality of through holes (11) surrounding said central opening (4) for receiving fixing means (25), said loudspeaker mounting frame (1, 31) being mounted on the cabinet element (12) by fixing means (25) entering in said plurality of through holes (11), **characterised in that**:
- said plurality of through holes (11) is tapered, so that the wide side of said through holes (11) is at a first side of the loudspeaker mounting frame (1, 31),
- said loudspeaker mounting frame (1, 31) is mounted on a convex part of the cabinet element (12), said convex part making contact with said first side of the loudspeaker mounting frame (1, 31) and
- said fixing means (25) have been entered from the narrow side of said through holes (11).

2. The system of claim 1, wherein said through holes (11) have a tapering angle of 5° to 15°.

3. The system according to claim 1 or 2, wherein said_plurality of through holes (11) extend between front and rear (5) main surfaces surrounding said central opening (4), and said loudspeaker mounting frame (1, 31) has a number of bosses (6) formed on at least one of said main surfaces (5) and said through holes (11) extend through said bosses (6).

4. The system according to claim 3, wherein said bosses (6) are segments of a sphere.

5. The system according to any one of claims 3 and 4, wherein one of said main surfaces (5) has the bosses (6) formed on it and the narrow side of each through hole (11) is formed at said one main surface (5).

6. A loudspeaker comprising a system according to any one of the preceding claims and a sound-emitting membrane (24) mounted in the central opening (4) of said loudspeaker mounting frame (1, 31).

7. The loudspeaker according to claim 6, wherein an outer edge of the membrane (24) is connected directly to an edge of said central opening (4) of the loudspeaker mounting frame (31).

8. The loudspeaker according to claim 6, wherein the membrane (24) is directly connected to a support ring (23) mounted in the central opening (4) of said loudspeaker mounting frame (1).

9. A loudspeaker system comprising a loudspeaker according to any one of claims 6 to 8, the cabinet element (12) having a support structure to which the loudspeaker is mounted, and a perforated shell (16) facing said sound-emitting membrane (24).

10. The loudspeaker system according to claim 9, wherein said support structure has at least one tip portion (32) matingly engaging one of said through holes (11) and at least one bore (20) aligned with another one of said through holes (11) for receiving a fixing means (25) inserted through said through hole (11).

11. The loudspeaker system according to claim 10, comprising a system according to claim 3, wherein said fixing means (25) has a shaft extending through said through hole (11) and a head having a diameter which is greater than that of the through hole (11), and the boss (6) is in contact with the head of the fixing means (25).

12. The loudspeaker system according to any one of claims 9, 10 or 11, wherein said support structure is integrally formed with the perforated shell (16).

13. The loudspeaker system according to claims 11 and 12, wherein said support structure comprises a number of stubs (17, 18) formed on the cabinet element (12), the loudspeaker mounting frame (1, 31) is held in contact with at least one resting surfaces (19, 21) of these stubs (17, 18), the at least one tip portion (32) and the at least one bore (20) each being formed in at least one of said resting surfaces (19, 21).

14. The loudspeaker system according to claim 13, wherein the loudspeaker mounting frame (1, 31) has a mounting surface portion (7) surrounding the central opening, and said surface portion (7) is located between a plane defined by the resting surfaces (19, 21) of said stubs (17, 18) and the perforated shell (16).

## Patentansprüche

1. System, das einen Lautsprechermontagerahmen (1, 31) und ein Gehäuseelement (12) umfasst, wobei der Lautsprechermontagerahmen (1, 31) eine zentrale Öffnung (4) zum Aufnehmen einer Lautsprechermembran (24) und mehrere Durchgangslöcher (11), die die zentrale Öffnung (4) umgeben, um Befestigungsmittel (25) aufzunehmen, aufweist, wobei der Lautsprechermontagerahmen (1, 31) durch Befestigungsmittel (25), die in die mehreren Durchgangslöcher (11) eintreten, an dem Gehäuseelement (12) montiert ist, **dadurch gekennzeichnet, dass**:
- die mehreren Durchgangslöcher (11) konisch verjüngt sind, so dass die weite Seite der Durchgangslöcher (11) auf einer ersten Seite des Lautsprechermontagerahmens (1, 31) ist,
- der Lautsprechermontagerahmen (1, 31) auf einem konvexen Teil des Gehäuseelements (12) montiert ist, wobei der konvexe Teil mit der ersten Seite des Lautsprechermontagerahmens (1, 31) in Kontakt steht, und
- die Befestigungsmittel (25) von der engen Seite der Durchgangslöcher (11) eingeführt worden sind.

2. System nach Anspruch 1, wobei die Durchgangslöcher (11) einen Neigungswinkel von 5° bis 15° aufweisen.

3. System nach Anspruch 1 oder 2, wobei die mehreren Durchgangslöcher (11) zwischen der vorderen und der hinteren (5) Hauptoberfläche, die die zentrale Öffnung (4) umgeben, verlaufen, und wobei der Lautsprechermontagerahmen (1, 31) eine Anzahl runder Vorsprünge (6) aufweist, die mindestens auf einer der Hauptoberflächen (5) gebildet sind, und wobei die Durchgangslöcher (11) durch die runden Vorsprünge (6) verlaufen.

4. System nach Anspruch 3, wobei die runden Vorsprünge (6) Kugelabschnitte sind.

5. System nach einem der Ansprüche 3 und 4, wobei eine der Hauptoberflächen (5) die runden Vorsprünge (6) aufweist, die auf ihr gebildet sind, und die schmale Seite jedes Durchgangslochs (11) auf der einen Hauptoberfläche (5) gebildet ist.

6. Lautsprecher, der ein System nach einem der vorhergehenden Ansprüche und eine schallabstrahlende Membran (24), die in der zentralen Öffnung (4) des Lautsprechermontagerahmens (1, 31) montiert ist, umfasst.

7. Lautsprecher nach Anspruch 6, wobei ein Außenrand der Membran (24) mit einem Rand der zentralen Öffnung (4) des Lautsprechermontagerahmens (31) direkt verbunden ist.

8. Lautsprecher nach Anspruch 6, wobei die Membran (24) mit einem Haltering (23), der in der zentralen Öffnung (4) des Lautsprechermontagerahmens (1) montiert ist, direkt verbunden ist.

9. Lautsprechersystem, das einen Lautsprecher nach einem der Ansprüche 6 bis 8 umfasst, wobei das Gehäuseelement (12) eine Haltestruktur, an der der Lautsprecher montiert ist, und eine durchlochte Außenhülle (16), die der schallaussendenden Membran (24) zugewandt ist, aufweist.

10. Lautsprechersystem nach Anspruch 9, wobei die Haltestruktur mindestens einen spitzen Abschnitt (32), der mit einem der Durchgangslöcher (11) zusammengefügt in Eingriff ist, und mindestens eine Bohrung (20), die auf ein anderes der Durchgangslöcher (11) ausgerichtet ist, um ein durch das Durchgangsloch (11) eingeführtes Befestigungsmittel (25) aufzunehmen, aufweist.

11. Lautsprechersystem nach Anspruch 10, das ein System nach Anspruch 3 umfasst, wobei das Befestigungsmittel (25) einen Schaft, der durch das Durchgangsloch (11) verläuft, und einen Kopf mit einem Durchmesser, der größer als der des Durchgangslochs (11) ist, aufweist, und wobei der runde Vorsprung (6) mit dem Kopf des Befestigungsmittels (25) in Kontakt steht.

12. Lautsprechersystem nach einem der Ansprüche 9, 10 oder 11, wobei die Haltestruktur mit der durchlochten Außenhülle (16) einteilig gebildet ist.

13. Lautsprechersystem nach den Ansprüchen 11 und 12, wobei die Haltestruktur eine Anzahl von Stutzen (17, 18) umfasst, die an dem Gehäuseelement (12) gebildet sind, wobei der Lautsprechermontagerahmen (1, 31) mit mindestens einer Auflagefläche (19, 21) dieser Stutzen (17, 18) in Kontakt gehalten ist, wobei der mindestens eine Spitzenabschnitt (32) und die mindestens eine Bohrung (20) jeweils in mindestens einer der Auflageflächen (19, 21) gebildet sind.

14. Lautsprechersystem nach Anspruch 13, wobei der Lautsprechermontagerahmen (1, 31) einen Montageoberflächenabschnitt (7) aufweist, der die zentrale Öffnung umgibt, und wobei sich der Oberflächenabschnitt (7) zwischen einer Ebene, die durch die Auflageflächen (19, 21) der Stutzen (17, 18) definiert ist, und der durchlochten Außenhülle (16) befindet.

## Revendications

1. Système comprenant un cadre de montage pour haut-parleur (1, 31) et une enceinte (12), ledit cadre de montage pour haut-parleur (1,31) comportant une ouverture centrale (4) pour recevoir une membrane de haut-parleur (24) et une pluralité de trous débouchants (11) entourant ladite ouverture centrale (4) pour recevoir un moyen de fixation (25), ledit cadre de montage pour haut-parleur (1, 31) étant monté sur l'enceinte (12) par un moyen de fixation (25) s'insérant dans ladite pluralité de trous débouchants (11), **caractérisé en ce que** :
- ladite pluralité de trous débouchants (11) est conique de sorte que le côté large desdits trous débouchants (11) se trouve au niveau d'un premier côté du cadre de montage pour haut-parleur (1, 31),
- ledit cadre de montage pour haut-parleur (1, 31) est monté sur une partie convexe de l'enceinte (12), ladite partie convexe entrant en contact avec ledit premier côté du cadre de montage pour haut-parleur (1, 31) et
- ledit moyen de fixation (25) est inséré depuis le côté étroit desdits trous débouchants (11).

2. Système selon la revendication 1, dans lequel lesdits trous débouchants (11) présentent un angle conique de 5° à 15°.

3. Système selon la revendication 1 ou 2, dans lequel ladite pluralité de trous débouchants (11) s'étend entre les surfaces principales avant et arrière (5) entourant ladite ouverture centrale (4), et ledit cadre de montage pour haut-parleur (1, 31) présente un certain nombre de bossages (6) formés sur au moins l'une desdites surfaces principales (5) et lesdits trous débouchants (11) s'étendent à travers lesdits bossages (6).

4. Système selon la revendication 3, dans lequel lesdits bossages (6) sont des segments d'une sphère.

5. Système selon l'une quelconque des revendications 3 et 4, dans lequel l'une desdites surfaces principales (5) présente les bossages (6) formés dessus et le côté étroit de chaque trou débouchant (11) est formé au niveau de ladite surface principale (5).

6. Haut-parleur comprenant un système selon l'une quelconque des revendications précédentes et une membrane sonore (24) montée dans l'ouverture centrale (4) dudit cadre de montage pour haut-parleur (1, 31).

7. Haut-parleur selon la revendication 6, dans lequel un bord extérieur de la membrane (24) est raccordé directement à un bord de ladite ouverture centrale (4) du cadre de montage pour haut-parleur (31).

8. Haut-parleur selon la revendication 6, dans lequel la membrane (24) est raccordée directement à un anneau de maintien (23) monté dans l'ouverture centrale (4) dudit cadre de montage pour haut-parleur (1).

9. Système de haut-parleur comprenant un haut-parleur selon l'une quelconque des revendications 6 à 8, l'enceinte (12) présentant une structure de support sur laquelle est monté le haut-parleur, et une coque perforée (16) orientée face à ladite membrane sonore (24).

10. Système de haut-parleur selon la revendication 9, dans lequel ladite structure de support présente au moins une partie en pointe (32) qui s'engage dans l'un desdits trous débouchants (11) et au moins un alésage (20) aligné sur un autre desdits trous débouchants (11) pour recevoir un moyen de fixation (25) inséré dans ledit trou débouchant (11).

11. Système de haut-parleur selon la revendication 10, comprenant un système selon la revendication 3, dans lequel ledit moyen de fixation (25) comporte un arbre qui s'étend à travers ledit trou débouchant (11) et une tête présentant un diamètre supérieur à celui du trou débouchant (11), et le bossage (6) est en contact avec la tête du moyen de fixation (25).

12. Système de haut-parleur selon l'une quelconque des revendications 9, 10 ou 11, dans lequel ladite structure de support est formée intégralement avec la coque perforée (16).

13. Système de haut-parleur selon les revendications 11 et 12, dans lequel ladite structure de support comprend un certain nombre d'embases (17, 18) formées sur l'enceinte (12), le cadre de montage pour haut-parleur (1, 31) est maintenu en contact avec au moins une surface d'appui (19, 21) de ces embases (17, 18), l'au moins une partie en pointe (32) et l'au moins un alésage (20) étant formés chacun dans au moins l'une desdites surfaces d'appui (19, 21).

14. Système de haut-parleur selon la revendication 13, dans lequel le cadre de montage pour haut-parleur (1, 31) comporte une partie de surface de montage (7) entourant l'ouverture centrale, et ladite partie de surface (7) est située entre un plan défini par les surfaces d'appui (19, 21) desdites embases (17, 18) et la coque perforée (16).
